# EUROPÄISCHE PATENTSCHRIFT

(11) **EP 0 782 508 B1**
(45) Veröffentlichungstag und Bekanntmachung des Hinweises auf die Patenterteilung: **24.01.2001**
(21) Anmeldenummer: 96927064.4
(22) Anmeldetag: 31.07.1996
(51) Int. Cl.: B60L 5/20

(54) **SCHLEIFSTÜCK FÜR STROMABNEHMER UND VERFAHREN ZU SEINER HERSTELLUNG**
COLLECTOR SHOE FOR A CURRENT COLLECTOR AND METHOD OF MANUFACTURING THE SHOE
PATIN POUR COLLECTEUR DE COURANT ET SON PROCEDE DE PRODUCTION

(30) Priorität: 08.08.1995 DE 19529169
(43) Veröffentlichungstag der Anmeldung: 09.07.1997
(73) Patentinhaber: HOFFMANN & Co ELEKTROKOHLE Aktiengesellschaft, 4823 Steeg am Hallstättersee (AT)
(72) Erfinder: SIESSL, Wolfgang, A-4801 Traunkirchen (AT); RASTL, Hans, A-4822 Bad Goisern (AT)
(74) Vertreter: Glawe, Delfs, Moll & Partner
(86) Internationale Anmeldenummer: EP9603372
(87) Internationale Veröffentlichungsnummer: WO9706025

(56) Entgegenhaltungen:
- WO-A-89/12559
- WO-A-89/12560
- GB-A- 387 172

## Beschreibung

Die Erfindung betrifft ein Schleifstück für Stromabnehmer mit einem langgestreckten Träger und einer langgestreckten Kohleleiste, die von dem Träger abgestützt ist, sowie ein Verfahren zur Herstellung des Schleifstücks.

Die Herstellung handelsüblicher Schleifstücke für Stromabnehmer z.B. für elektrische Schienenfahrzeuge erfolgt durchweg in der Weise, daß eine aus Kohlematerial gefertigte Kohleleiste auf die Oberseite eines in der Regel aus Metall hergestellten Trägers aufgesetzt und an diesem durch geeignete Befestigungsmittel, z.B. durch Verkleben, Löten und/oder Festklemmen befestigt wird. Der Träger dient zur Abstützung der Kohleleiste und zur Befestigung des Schleifstücks an dem Stromabnehmerbügel.

Solche konventionellen Schleifstücke haben in Herstellung und Betrieb verschiedene Nachteile. Ein Nachteil besteht darin, daß zwischen dem Fahrdraht, an dem das Schleifstück entlanggleitet, und den freiliegenden Oberflächen des Metallträgers ein Lichtbogenüberschlag erfolgen kann. Diese Lichtbogengefahr kann vor allem durch Nässebildung und speziell durch Eis- oder Rauhreifbildung herbeigeführt werden. Durch einen solchen Lichtbogen kann das Schleifstück, insbesondere der Metallträger, beschädigt werden. Ein weiterer Nachteil besteht in den unterschiedlichen Wärmedehnungseigenschaften der Kohleleiste und des Trägers. Dies kann bei Temperaturschwankungen zu unterschiedlicher Ausdehnung dieser beiden Elemente führen, wodurch das gesamte Schleifstück sich nach Art eines Bimetalls krümmen kann. Dies kann zu mechanischen Beschädigungen, insbesondere im Bereich der Kohleleiste, sowie zu thermischer Überlastung der Klebefuge zwischen Kohleleiste und Träger führen. Schließlich ist die Herstellung der konventionellen Schleifstücke aufwendig, da vor allem die Herstellung einer sicheren, dauerhaften und hochbelastbaren Verbindung zwischen der Kohleleiste und dem gesondert von ihr gefertigten Träger eines erheblichen Aufwandes bedarf.

Aus DE-PS 431 365, DE-PS 671 946, AT-PS 139 525 und AT-PS 140 894 sind Schleifstücke mit innenliegendem Träger bekannt, deren aus aneinandergereihten Abschnitten zusammengesetzte Kohlenleisten rohrförmig jeweils einen durchgehenden Hohlraum umschließen, in dem der die Kohleleiste abstützende Metallträger angeordnet ist. Der Metallträger ist rohrförmig, und seine kraftübertragende Verbindung mit der Kohleleiste kann entweder dadurch geschehen, daß der Metallträger geschlitzt ist und mit elastischer Vorspannung gegen die Innenwandung der Kohlenleiste anliegt (AT-PS 139 525), oder daß zwischen dem Metallträger und der Kohleleiste eine Ausgußmasse angeordnet ist (AT-PS 140 894), falls die Kohleleiste bzw. deren Teilabschnitte nicht drehbar auf dem Träger gelagert sind (DE-PS 431 365 und DE-PS 506 064). Da das Kohlematerial der Kohleleiste nur sehr begrenzt Zugspannungen aufnehmen kann, ist die Anordnung eines elastisch vorgespannten Trägers im Hohlraum der Kohleleiste problematisch. Das Einbringen einer Ausgußmasse zwischen Träger und Kohleleiste führt nicht zu einer optimal kraftübertragenden und stromführenden Verbindung.

Ein Verfahren des direkten Anformens eines Kunststoffträgers an eine im wesentlichen flache Unterseite einer Kohleleiste ist aus WO 89 12560 A bekannt.

Aufgabe der Erfindung ist es, ein mit rationellen modernen Fertigungsmethoden herstellbares Schleifstück anzugeben, das den heutigen Anforderungen an mechanischer und elektrischer Belastbarkeit genügt und bei dem eine sichere Verbindung zwischen der Kohleleiste und dem in ihrem Hohlraum angeordneten Träger erzielt werden kann.

Die Aufgabe wird durch das im Anspruch 1 angegebene Schleifstück und das im Anspruch 6 angegebene Verfahren zu seiner Herstellung gelöst. Die abhängigen Ansprüche beziehen sich auf weitere vorteilhafte Merkmale des Schleifstücks und des Herstellungsverfahrens gemäß der Erfindung.

Das erfindungsgemäße Verfahren sieht eine direkte In-situ-Anformung des Trägers an die Innenwandung des Hohlraums der Kohleleiste vor. Hierdurch wird eine gleichmäßige und kraftübertragende Anlage des Trägers an die Innenwandung des Hohlraums der Kohleleiste erzielt, wobei auch die bei der Herstellung der Kohleleiste unvermeidlichen Toleranzen der Querschnittsabmessungen des Hohlraumes von selbst ausgeglichen werden. Beim fertigen Schleifstück ist die Kohle keinen bleibenden Zugspannungen durch den Träger ausgesetzt. Da die Kohleleiste den Träger auf mindestens drei Seiten umschließt, gibt es insbesondere an den Längsseiten des Schleifstücks keine freiliegenden Oberflächen des Trägers, an denen ein Lichtbogen vom Träger zum Fahrdraht überspringen könnte. Auch kann eine unterschiedliche Wärmedehnung der Kohleleiste und des Trägers nicht zu einer Krümmung des Schleifstücks führen, da die Kohleleiste den Träger im wesentlichen auf allen Seiten umgibt.

Ausführungsformen der Erfindung werden anhand der Zeichnungen näher erläutert. Es zeigt:

Fig. 1 bis 4 Querschnitte durch verschiedene Ausführungsformen von mit dem erfindungsgemäßen Verfahren hergestellten Schleifstücken.

Fig. 5 und 6 Längsschnitte im Endbereich des Schleifstücks gemäß Fig. 1.

Fig. 7, 8 und 9 eine weitere Ausführungsform des erfindungsgemäßen Schleifstücks in Seitenansicht, im Querschnitt und in einer Detailansicht.

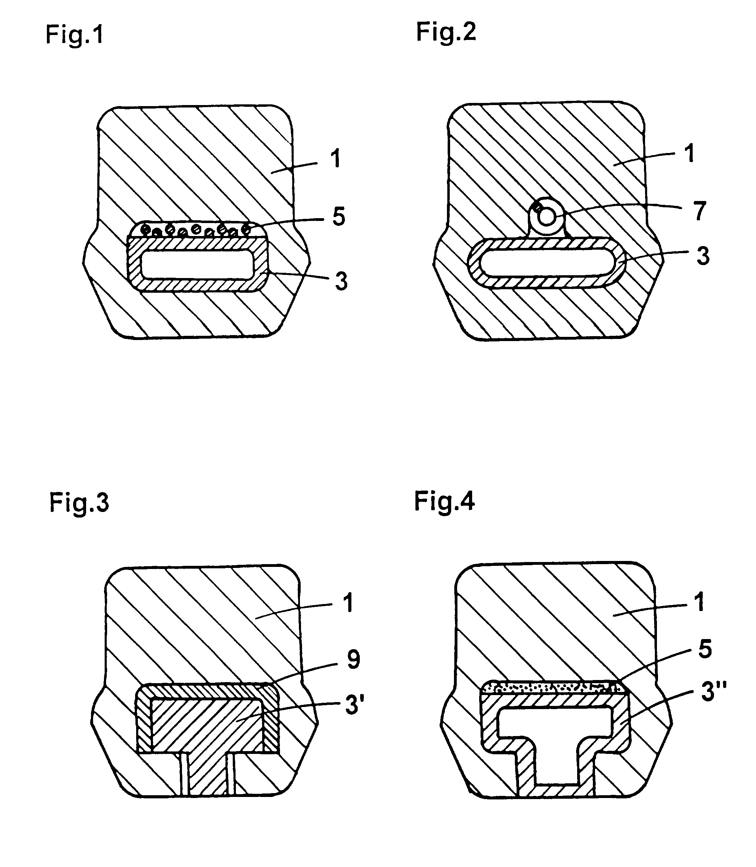

Das in Fig. 1 im Querschnitt dargestellte Schleifstück besteht aus einer Kohleleiste 1 und einem Träger 3. Diese Kohleleiste 1 besteht aus einem bei Stromabnehmern üblichen Kohlewerkstoff und ist durch ein Strangpress- oder Extrudierverfahren mit einem Querschnitt hergestellt, der einen in Längsrichtung durchgehenden Hohlraum vollständig umschließt. Der Querschnitt der Kohleleiste 1 kann deshalb als rohrförmig bezeichnet werden. Der von der Kohleleiste 1 umschlossene Hohlraum ist bei der Ausführungsform nach Fig. 1 rechteckig, kann aber selbstverständlich andere Formen aufweisen.

Der Träger 3 ist in dem von der Kohleleiste 1 umschlossenen Hohlraum angeordnet. Er besteht bei der Ausführungsform aus einem rechteckigen Hohlprofil und kann aus leitfähigem und nichtleitfähigem Material bestehen. Ferner ist bei der Ausführungsform nach Fig. 1 in dem Hohlraum in der Kohleleiste 1 an der Oberseite des Trägers 3 eine in Längsrichtung verlaufende elektrisch leitfähige Schicht 5 angeordnet. Besonders vorteilhaft ist, wenn die leitfähige Schicht 5 aus einem aus Metalldraht geflochtenem Band besteht, wie in Fig. 1 angedeutet. Die elektrisch leitfähige Schicht 5 kann aber auch z.B. aus einem galvanisch aufgebrachten Belag auf der Oberseite des Trägers 3 und/oder auf der Innenseite des Hohlraums der Kohleleiste 1 bestehen.

Der Träger 3 kann aus elektrisch leitfähigem oder nichtleitfähigem Material bestehen. Falls der Träger 3 aus nichtleitfähigem Material besteht, wie z.B. faserverstärktem Kunststoff, so ist eine elektrisch leitfähige Schicht 5 besonders vorteilhaft, um den elektrischen Strom, der von der Kohleleiste 1 vom Fahrdraht (nicht dargestellt) abgenommen wird, in Längsrichtung der Kohleleiste 1 zu den an den Enden des Schleifstücks vorgesehenen Anschlußstellen zu leiten. Falls der Träger 3 aus elektrisch leitfähigem Material besteht, z.B. aus geschäumtem Aluminium, ist die elektrisch leitfähige Schicht 5 nicht unbedingt notwendig, kann aber trotzdem vorteilhaft sein, um den Stromübergang aus der Kohleleiste 1 in den Träger 3 zu verbessern.

Gemäß dem erfindungsgemäßen Herstellungsverfahren erfolgt die Herstellung des Schleifstücks gemäß Fig. 1 in folgender Weise:

Es wird ein rohrförmiger Vorformling z.B. aus faserverstärktem, noch nicht ausgehärtetem Kunststoff (ein sogenannter "Prepreg") hergestellt, der kleinere Querschnittsabmessungen als der Hohlraum in der Kohleleiste 1 aufweist. Nach dem Einbringen des Vorformlings in den Hohlraum der Kohleleiste 1 wird durch Einleiten eines Druckmittels, z.B. Preßluft oder ein Alkohol-Wassergemisch, ein Innendruck an den Vorformling angelegt und dieser dadurch aufgeweitet, so daß er gegen die Innenwandung des Hohlraums angepreßt und angeformt wird. In diesem Zustand läßt man den Kunststoff aushärten, so daß man einen vollständig der Kontur des Hohlraums angepaßten und mit dessen Innenwandung form- und kraftschlüssig verbundenen Träger erhält. Die zum Aushärten erforderliche Temperatur von z. B. über 150° kann man durch Erhitzen des Druckmittels und/oder Beheizen der Kohleleiste 1 von außen aufbringen.

Anstelle von faserverstärktem Kunststoff kann man den Täger auch z.B. aus Aluminiumschaum nach dem beschriebenen Verfahren bzw. unter Ausnutzung der Blähwirkung eines Treibmittels, mit Direktanformung gegen die Innenwand des Hohlraums herstellen. Bei dem beschriebenen Verfahren wird das als Stromleiter dienende Metalldrahtgeflecht 5 oder dgl. gleichzeitig mit oder schon vor dem Vorformling für den Träger 3 in den Hohlraum der Kohleleiste 1 eingebracht. Bei außreichender Erweichung des Vorformlings beim Verformungsprozeß kann der Kunststoff auch in die Zwischenräume des Metallgeflechts 5 eindringen, so daß dieses eingebettet wird.

Ein besonderer Vorteil des erfindungsgemäßen Schleifstücks besteht darin, daß man der den Träger 3 umschließenden Kohleleiste 1 jede beliebige äußere Umrißform geben kann. Bei der Ausführungsform nach Fig. 1 hat die Kohleleiste 1 eine äußere Querschnittskontur, die exakt dem Umriß von derzeit handelsüblichen, aus einem Aluminiumträger mit darauf geklebter Kohleleiste bestehenden Schleifstücken entspricht, genauer gesagt der Außenkontur des von der Deutschen Bundesbahn verwendeten Einheitsschleifstücks. Es ist erfindungsgemäß sehr einfach möglich, der Kohleleiste 1 durch entsprechende Gestaltung der Extrusionsdüse jede gewünschte, z.B. aerodynamisch vorteilhafte Außenkontur zu geben.

Ein weiterer wesentlicher Vorteil, der sich aus der frei wählbaren Querschnittsform von Kohleleiste und Träger bei dem erfindungsgemäßen Schleifstück ergibt, besteht darin, daß auch hinsichtlich des Gewichtes und der Massenverteilung des Schleifstücks eine weitgehende Gestaltungsfreiheit besteht. Im Vergleich mit heute handelsüblichen Schleifstücken, die durchweg in Klebe-, Löt- oder Klemmtechnik hergestellt werden, kann das erfindungsgemäße Schleifstück wahlweise entweder exakt gewichtsgleich hergestellt werden, um optimal zu bestehenden Stromabnehmersystemen zu passen, oder aber mit einem erheblich, z.B. um 30% oder mehr geringeren Gewicht, wodurch sich erhebliche Vebesserungen im dynamischen Verhalten des Stromabnehmersystems erzielen lassen.

Ein weiterer besonderer Vorteil liegt darin, daß der Träger und seine elektrische Kontaktierung mit der Kohleleiste, da er allseitig von Kohlewerkstoff umgeben ist, wesentlich beständiger und unempfindlicher gegen Umwelteinflüsse, wie korrosive Gase, agressiver Staub, Salznebel etc. ist als die heute verwendeten Schleifstücke mit exponierten Metall- oder Kunststoffträgern.

Bei der Ausführungsform nach Fig. 2 umschließt die Kohleleiste 1 einen in Längsrichtung durchgehenden Hohlraum, der im Querschnitt gesehen einen breiten unteren Teil und einen etwa kreisförmigen oberen Teil aufweist. Im unteren Teil befindet sich ein in Längsrichtung durchgehender Träger 3, der in ähnlicher Weise ausgebildet ist, wie dies bei der Ausführungsform nach Fig. 1 beschrieben wurde. Im oberen kreisförmigen Teil des Hohlraums befindet sich eine in Längsrichtung durchgehende Drahtwendel 7, die mit Vorspannung gegen die Innenwandung der Kohleleiste 1 anliegt und als elektrischer Leiter dient, um den vom Fahrdraht abgenommenen elektrischen Strom in Längsrichtung der Kohleleiste 1 abzuleiten. Die Drahtwendel 7 wird in einem in Längsrichtung elastisch gedehnten Zustand in den Hohlraum eingezogen und dann durch Loslassen entspannt, so daß sie sich durch ihre elastische Rückstellkraft gegen die Innenwandung der Kohleleiste 1 anlegt.

Bei der Ausführungsform nach Fig. 2 kann der obere, kreisförmige Teil des Hohlraums auch als Bruchdetektorkanal genutzt werden. Er wird hierzu am Ende der Kohleleiste 1 mit einer Einrichtung verbunden, die ständig einen vorgegebenen Gasdruck in dem Hohlraum aufrecht erhält. Ein Riß in der Kohleleiste 1, oder eine bis zum Hohlraum gehende Abnutzung, verursacht ein Absinken des Gasdruckes, der detektiert werden und als Anzeichen für die Beschädigung oder Abnutzung der Kohleleiste 1 dienen kann. Entsprechende Bruchdetektoreinrichtungen sind dem Fachmann bekannt.

Bei der Ausführungsform nach Fig. 3 umschließt die Kohleleiste 1 einen inneren Hohlraum nicht vollständig, sondern mit Ausnahme eines zur Unterseite hin offenen Spaltes. Der Querschnitt der Kohleleiste gemäß Fig. 3 ist somit C-förmig. In den Hohlraum der Kohleleiste 1 ist ein Träger 3' eingebracht, der als eine im Querschnitt T-förmige massive Leiste ausgebildet ist. Der Träger 3' kann z.B. aus geschäumtem Kunststoff oder Aluminium bestehen. Zwischen dem Träger 3' und der Innenwandung des Hohlraumes der Kohleleiste 1 befindet sich eine elektrisch leitfähige Schicht 5, die den vom Fahrdraht abgenommenen Strom aus der Kohleleiste 1 weiterleitet. Ist der Träger 3'selbst leitfähig, so kann die Schicht 5 entfallen.

Die Ausführungsform nach Fig. 4 stellt eine Kohleleiste 1 mit einem C-förmigen Querschnitt wie in Fig. 3 dar. Der Träger 3" wird in der gleichen Weise, wie dies bei der Ausführungsform nach Fig. 1 beschrieben wurde, eingebracht. Der Träger 3" wird als rohrförmiger Vorformling z.B. aus faserverstärktem Kunststoff in den Hohlraum der Kohleleiste 1 eingebracht, mittels Preßluft aufgeweitet und an die Innenwandung des Hohlraums einschließlich der Seitenwandungen des zur Unterseite hin offenen Spaltes angepreßt, so daß nach der Erhärtung des Kunstharzes ein T-förmiger Träger 3", der den nach unten offenen Hohlraum vollständig abschließt, entsteht. Der Träger 3" kann in gleicher Weise wie bereits unter Fig. 1 gezeigt mit einer Kontaktvorrichtung zur Ableitung des Stromes aus der Kohleleiste 1 zu den Enden des Schleifstücks versehen sein.

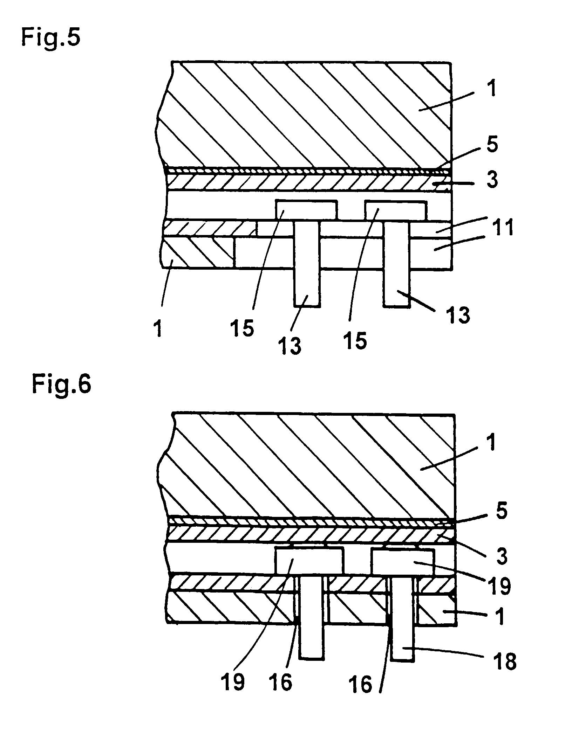

Fig. 5 zeigt im Längsschnitt eine mögliche Ausbildung des in Fig. 1 gezeigten Schleifstücks an einem seiner Enden. Die untere Wandung sowohl der Kohleleiste 1 als auch des Trägers 3, ist mit einem Längsschlitz 11 versehen. Durch diesen Schlitz 11 erstrecken sich Befestigungsbolzen 13, deren Köpfe 15 im Inneren des Trägers 3 liegen und dort z.B. in geeigneter Weise befestigt sein können.

Fig. 6 zeigt im Längsschnitt eine weitere mögliche Ausbildung des in Fig. 1 gezeigten Schleifstücks an seinem Ende. Die untere Wandung, sowohl der Kohleleiste 1 als auch des Trägers 3, ist mit mindestens einer Bohrung 16 versehen. Durch diese Bohrung erstrecken sich Befestigungsbolzen 18, die in im Inneren des Trägers liegenden Gleitmuttern 19 verschraubt sind.

Wenn das Einbringen der Befestigungsbolzen 18 vor dem Verformen und Aushärten des Trägers 3 erfolgt, werden sie beim Verformen und Aushärten integral in den Träger 3 eingebettet.

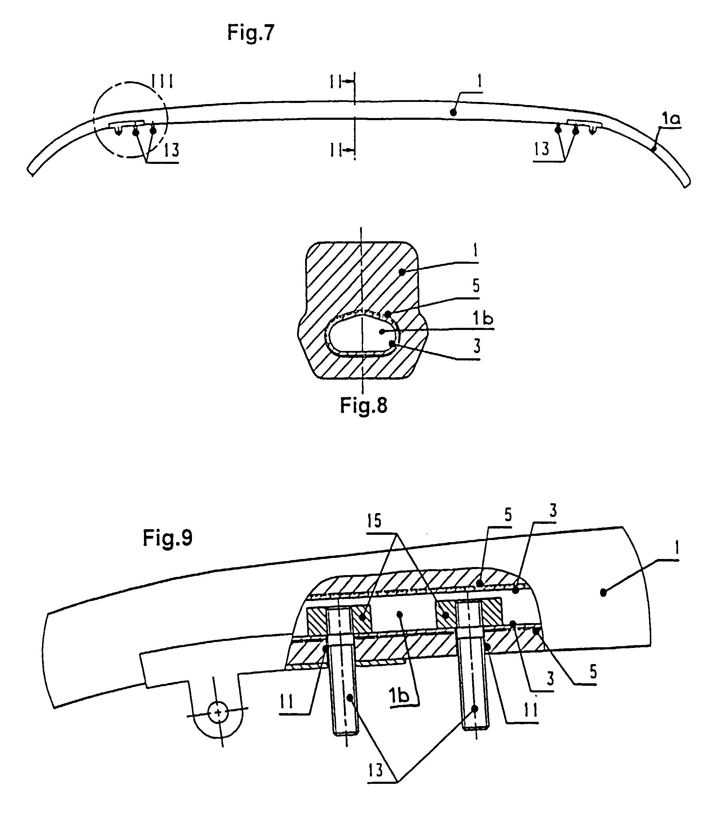

Fig. 7 zeigt in Seitenansicht ein erfindungsgemäßes Schleifstück 1, an dem im Bereich seiner Enden abgekrümmte Hörner 1a, sogenannte Auflaufhörner für den Fahrdraht, einstückig angeformt sind.

Fig. 8 zeigt einen Querschnitt nach der Linie II - II von Fig. 7 Danach umschließt die Kohleleiste 1 allseitig einen in Längsrichtung durchgehenden Hohlraum 1b, der einen ovalen, an der Oberseite leicht dachförmig gewinkelten Querschnitt aufweist. In dem Hohlraum 1b befindet sich der rohrförmige Träger 3, der durch das beschriebene Verformungsverfahren direkt an die Innenwandung des Hohlraums 1b angeformt ist, wobei zwischen dem Träger 3 und der Innenwandung des Hohlraums 1b eine dünne leitfähige Schicht 5, z. B. Drahtgeflecht angeordnet ist, die den Träger 3 allseitig umgibt.

Der Hohlraum 1b und der in diesem angeordnete Träger 3 erstrecken sich über die gesamte Länge des Schleifstücks gemäß Figur 7 einschließlich der Hörner 1a, so daß auch die Hörner la durch den Träger 3 abgestützt sind. Der zur Herstellung des Trägers 3 dienende rohrförmige Vorformling wird in hinreichend erweichtem beziehungsweise flexiblem Zustand in den Hohlraum 1b eingeschoben, so daß er sich der gekrümmten Form der Hörner 1a anpassen kann.

Fig. 9 zeigt ein Detail bei III in Fig. 7 am Übergang zwischen dem Mittelteil und dem Horn 1a des Schleifstücks. Man erkennt die Kohleleiste 1 mit dem auf der ganzen Länge durchgehenden Hohlraum 1b und dem im Hohlraum 1b angeordneten, relativ dünnwandigen rohrförmigen Träger 3 sowie die diesen umgebende leitfähige Schicht 5. Durch Löcher 11 in der unteren Wandung der Kohleleiste 1 sind Befestigungsbolzen 13 eingeführt und im Inneren des Trägers 3 durch Muttern 15 gesichert. Die Bolzen 13 dienen zur mechanischen Befestigung des Schleifstücks an einem Stromabnehmerbügel. Zur elektrischen Kontaktierung dient ein metallisches Kontaktelement, das im dargestellten Ausführungsbeispiel kontaktierend an der Außenfläche der Kohleleiste 1 anliegt. Es ist aber auch möglich das metallische Kontaktelement durch eine Öffnung in der unteren Wandung der Kohleleiste 1 hindurch mit der leitfähigen Schicht 5 zwischen Träger 3 und Kohleleiste 1 in Kontakt zu bringen.

Das beschriebene Herstellungsverfahren mit direkter Anformung eines innenliegenden Trägers an den Hohlraum der Kohleleiste ermöglicht eine im Vergleich zu den herkömmlichen Verfahren mit Löt-, Klebe- oder Klemmtechnik sehr kostengünstige Fertigung des Schleifstücks in praktisch einem Arbeitsgang ohne wesentliche Nacharbeiten am Schleifstück. Die Trägeranformung, die mechanische Verbindung von Träger und Kohleleiste und die elektrische Kontaktierung von Träger und Kohleleiste werden in einem Arbeitsgang realisiert. Das Verfahren liefert ein echtes Integral-Schleifstück, das insbesondere auch direkt angeformte Auflaufhörner in einstückiger Form haben kann, wodurch sich optimale Festigkeit und hohe Betriebssicherheit ergibt, da keine zusätzliche Verbindung zwischen Kohleleiste, Auflaufhörnern und Träger erforderlich ist.

Durch die gleichmäßige und intensive Anformung des Trägers an die Kohleleiste wird einerseits eine optimale und gleichmäßige mechanische Abstützung der Kohleleiste und andererseits eine optimale Stromverteilung innerhalb des Schleifstücks erzielt. Die Gefahr von örtlichen Überlastungen bei der Stromableitung ist auf ein Minimum reduziert. Die mechanische Stabilität und Elastizität des Schleifstücks ist gegenüber herkömmlichen Schleifstücken wesentlich höher. Die Schleifstückverformung in Folge unterschiedlicher Wärmedehnung von Träger und Kohleleistewird durch die innenliegende Anordnung des Trägers auf ein Minimum reduziert, wodurch sich eine weitgehende Spannungsfreiheit des Schleifstücks ergibt.

## Patentansprüche

1. Schleifstück für Stromabnehmer bestehend aus einer langgestreckten Kohleleiste (1) mit rohrförmigem, U-förmigem oder C-förmigem Querschnitt, die einen in Längsrichtung der Kohleleiste verlaufenden Hohlraum an mindestens drei Seiten umschließt, und einem in dem Hohlraum angeordneten langgestreckten Träger (3), der die Kohleleiste (1) abstützt, dadurch **gekennzeichnet**, daß der Träger (3) ein Formstück ist, das seine Endform durch unmittelbares Anformen an die Innenwandung des Hohlraums der Kohleleiste (1) erhalten hat.

2. Schleifstück nach Anspruch 1, dadurch **gekennzeichnet**, daß der Träger (3) aus Kunststoff geformt ist, und daß zwischen dem Träger (3) und mindestens einem Teil der Innenwandung des Hohlraums der Kohleleiste (1) ein stromleitendes Element oder eine stromleitende Schicht (5, 9) angeordnet ist.

3. Schleifstück nach Anspruch 1, dadurch **gekennzeichnet**, daß der Träger (3) aus Kunststoff geformt ist, und daß mindestens die an die Innenwandung des Hohlraums der Kohleleiste (1) angrenzende Oberflächenschicht des Trägers (3) durch Einlagerung elektrisch leitfähiger Fasern, Partikel oder dergleichen elektrisch leitfähig gemacht ist.

4. Schleifstück nach einem der Ansprüche 1 bis 3, dadurch **gekennzeichnet**, daß die Kohleleiste (1) mindestens in einem ihrer Endbereiche mindestens eine Öffnung in Form eines längsverlaufenden Schlitzes, einer Bohrung oder dergleichen aufweist, durch die ein elektrisches Kontaktelement und/oder ein mechanisches Befestigungsmittel mit dem Träger verbunden ist.

5. Schleifstück nach einem der Ansprüche 1 bis 4, dadurch **gekennzeichnet**, daß an der Kohleleiste in ihren Endbereichen gekrümmte Hörner (1a) einstückig angeformt sind, daß sich der Hohlraum der Kohleleiste auch durch die Hörner (1a) erstreckt und daß sich der Träger (3) mit einer entsprechend den Hörnern (1a) gekrümmten Form auch über die Länge der Hörner (1a) erstreckt und diese abstützt.

6. Verfahren zur Herstellung eines Schleifstücks für Stromabnehmer, bestehend aus einer langgestreckten Kohleleiste (1) mit rohrförmigem, U-förmigem oder C-förmigem Querschnitt, die einen in Längsrichtung der Kohleleiste verlaufenden Hohlraum an mindestens drei Seiten umschließt, und einem in dem Hohlraum angeordneten langgestreckten Träger (3), der die Kohleleiste (1) abstützt, mit den Schritten Herstellen eines Vorformlings des Trägers, dessen Querschnittsabmessungen kleiner als die des Hohlraums der Kohleleiste sind,
Einbringen des Vorformlings in den Hohlraum der Kohleleiste,
Verformen des Vorformlings zum fertigen Träger durch ein Formungsverfahren, durch welches der Vorformling im Querschnitt aufgeweitet und gegen mindestens einen Teil der Innenwandung des Hohlraums angeformt wird.

7. Verfahren nach Anspruch 6, bei dem eine elektrisch leitfähige Schicht (5) zwischen dem Vorformling und mindestens einem Teil der Innenwandung des Hohlraums angeordnet wird.

8. Verfahren nach Anspruch 6 oder 7, bei dem der Vorformling rohrförmig ist und durch Zuführen eines Druckmediums in das Innere des Vorformlings verformt und aufgeweitet wird.

9. Verfahren nach einem der Ansprüche 6 bis 8, bei dem der Vorformling aus nicht ausgehärtetem Kunststoff besteht und während oder nach seiner Verformung ausgehärtet wird.

10. Verfahren nach Anspruch 8, dadurch **gekennzeichnet**, daß ein erhitztes Druckmedium verwendet wird, welches die für die Aushärtung erforderliche Erwärmung des Vorformlings bewirkt oder unterstützt.

11. Verfahren nach Anspruch 8 oder 10, dadurch **gekennzeichnet**, daß als Druckmedium eine Flüssigkeit, insbesondere ein Gemisch aus Wasser und Alkohol, benutzt wird.

12. Verfahren nach Anspruch 9, bei dem der Kunststoff ein faserverstärkter Kunststoff ist.

13. Verfahren nach einem der Ansprüche 6 bis 8, bei dem der Vorformling aus einer mittels Treibmittel aufschäumbaren Aluminiumlegierung besteht und durch Aufschäumen verformt wird.

14. Verfahren nach Anspruch 9 oder 12, dadurch **gekennzeichnet**, daß der Vorformling mindestens in seiner Oberflächenschicht durch Einlagern von leitfähigen Fasern, Partikeln oder dergleichen leitfähig gemacht ist.

15. Verfahren nach einem der Ansprüche 6 bis 14, dadurch **gekennzeichnet**, daß vor dem Verformen und gegebenenfalls Aushärten des Vorformlings mindestens ein elektrisches Kontaktelement und/oder ein mechanisches Befestigungselement in den Vorformling eingelagert und bei dessen Verformen und gegebenenfalls Aushärten in den Träger eingeformt werden.

## Claims

1. A sliding contact for current collectors, comprising an elongate carbon strip (1) of tubular U-shaped or C-shaped cross-section, which embraces on at least three sides a cavity extending in the longitudinal direction of the carbon strip, and an elongate support (3) which is disposed in the cavity and which supports the carbon strip (1), characterised in that the support (3) is a moulded part which has received its final shape by being directly formed on the inner wall of the cavity of the carbon strip (1).

2. A sliding contact according to Claim 1, characterised in that the support (3) is formed from plastics material and in that a current-conducting element or a current-conducting layer (5,9) is disposed between the support (3) and at least one part of the inner wall of the cavity of the carbon strip (1).

3. A sliding contact according to Claim 1, characterised in that the support (3) is formed from plastics material and in that at least the surface layer of the support (3) adjoining the inner wall of the cavity of the carbon strip (1) is rendered electrically conductive by inclusion of electrically conductive fibres, particles or the like.

4. A sliding contact according to any one of Claims 1 to 3, characterised in that at least in one of its end regions the carbon strip (1) has at least one opening in the form of a longitudinally extending slot, bore or the like, through which an electrical contact element and/or a mechanical fastening means is connected to the support.

5. A sliding contact according to any one of Claims 1 to 4, characterised in that curved horns (1a) are formed integrally on the carbon strip in its end regions, in that the cavity of the carbon strip also extends through the horns (1a) and in that the support (3) also extends over the length of the horns (1a) with a curved shape corresponding to the horns (1a) and supports them.

6. A method of producing a sliding contact for current collectors, comprising an elongate carbon strip (1) of tubular U-shaped or C-shaped cross-section, which embraces on at least three sides a cavity extending in the longitudinal direction of the carbon strip, and an elongate support (3) which is disposed in the cavity and which supports the carbon strip (1), with the steps of producing a preform of the support, the cross-sectional dimensions of which are smaller than that of the cavity of the carbon strip, introducing the preform into the cavity of the carbon strip, deforming the preform into the finished support by a forming process, by which the preform is expanded in cross-section and is formed on at least one part of the inner wall of the cavity.

7. A method according to Claim 6, in which an electrically conductive layer (5) is disposed between the preform and at least one part of the inner wall of the cavity.

8. A method according to Claim 6 or 7, in which the preform is tubular and is deformed and expanded by feeding a pressure medium into the interior of the preform.

9. A method according to any one of Claims 6 to 8, in which the preform consists of uncured plastics material and is cured during or after its deformation.

10. A method according to Claim 8, characterised in that a heated pressure medium is used which induces or assists the heating of the preform required for curing.

11. A method according to Claim 8 or 10, characterised in that a liquid is used as pressure medium, in particular a mixture of water and alcohol.

12. A method according to Claim 9, in which the plastics material is a fibre-reinforced plastics material.

13. A method according to any one of Claims 6 to 8, in which the preform consists of an aluminium alloy which can be foamed by means of blowing agent and is deformed by foaming.

14. A method according to Claim 9 or 12, characterised in that the preform is rendered conductive at least in its surface layer by inclusion of conductive fibres, particles or the like.

15. A method according to any one of Claims 6 to 14, characterised in that, before the deforming and, optionally, curing of the preform, at least one electrical contact element and/or a mechanical fastening element is incorporated into the preform and is moulded into the support during its deforming and optionally its curing.

## Revendications

1. Balai pour collecteur de courant, constitué d'une barrette de charbon (1) allongée de section tubulaire, en forme de U ou de C, qui, sur trois côtés au moins, enferme une cavité s'étendant dans le sens de la longueur de la barrette de charbon, ainsi que d'un support (3) allongé, qui est disposé dans la cavité et qui soutient la barrette de charbon (1), caractérisé en ce que le support (3) est une pièce moulée qui a obtenu sa forme définitive par moulage direct sur la paroi intérieure de la cavité de la barrette de charbon (1).

2. Balai selon la revendication 1, caractérisé en ce que le support (3) est moulé dans une matière plastique, et en ce qu'un élément conducteur de courant ou une couche conductrice de courant (5, 9) est disposé entre le support (3) et au moins une partie de la paroi intérieure de la cavité de la barrette de charbon (1).

3. Balai selon la revendication 1, caractérisé en ce que le support (3) est moulé dans une matière plastique, et en ce qu'au moins la couche superficielle du support (3), qui est adjacente à la paroi intérieure de la cavité de la barrette de charbon (1), est rendue électriquement conductrice par inclusion de fibres, de particules ou similaires, qui sont électriquement conductrices.

4. Balai selon l'une des revendications 1 à 3, caractérisé en ce que la barrette de charbon (1) présente, au moins dans l'une de ses zones terminales, au moins une ouverture sous la forme d'une fente allongée, d'un perçage ou similaire, à travers laquelle un élément de contact électrique et/ou un moyen de fixation mécanique est relié au support.

5. Balai selon l'une des revendications 1 à 4, caractérisé en ce que des cornes (1a), courbées dans leurs zones terminales, sont moulées d'un seul tenant sur la barrette de charbon, en ce que la cavité de la barrette de charbon s'étend aussi à travers les cornes (1a) et en ce que le support (3) s'étend aussi, avec une forme courbée correspondant à celle des cornes (1a), sur la longueur des cornes (1a) et soutient ces dernières.

6. Procédé de fabrication d'un balai pour collecteur de courant, constitué d'une barrette de charbon (1) allongée de section tubulaire, en forme de U ou de C, qui, sur trois côtés au moins, enferme une cavité s'étendant dans le sens de la longueur de la barrette de charbon, ainsi que d'un support (3) allongé, qui est disposé dans la cavité et qui soutient la barrette de charbon (1), présentant les étapes suivantes :
fabrication d'une pré-ébauche du support dont la section a des dimensions inférieures à celles de la cavité de la barrette de charbon,
introduction de la pré-ébauche dans la cavité de la barrette de charbon,
déformation de la pré-ébauche en support fini, par un procédé de formage au moyen duquel la pré-ébauche est élargie dans sa section, et est moulée contre une partie au moins de la paroi intérieure de la cavité.

7. Procédé selon la revendication 6, dans lequel une couche électriquement conductrice (5) est disposée entre la pré-ébauche et au moins une partie de la paroi intérieure de la cavité.

8. Procédé selon la revendication 6 ou 7 dans lequel la pré-ébauche est tubulaire et est déformée ainsi qu'élargie par arrivé d'un fluide sous pression à l'intérieur de la pré-ébauche.

9. Procédé selon l'une des revendications 6 à 8, dans lequel la pré-ébauche est en matière plastique non durcie et est durcie pendant ou après sa déformation.

10. Procédé selon la revendication 8, caractérisé en ce qu'on utilise un fluide sous pression chauffé, qui provoque ou favorise l'échauffement de la pré-ébauche, nécessaire au durcissement.

11. Procédé selon la revendication 8 ou 10, caractérisé en ce qu'on utilise comme fluide sous pression un liquide, notamment un mélange d'eau et d'alcool.

12. Procédé selon la revendication 9, dans lequel la matière plastique est une matière plastique renforcée aux fibres.

13. Procédé selon l'une des revendications 6 à 8, dans lequel la pré-ébauche est en alliage d'aluminium qui peut être transformé en mousse au moyen d'un agent moussant, et est déformée par transformation en mousse.

14. Procédé selon la revendication 9 ou 12, caractérisé en ce que la pré-ébauche est rendue conductible, au moins dans sa couche superficielle, par inclusion de fibres conductrices, de particules conductrices, ou similaires.

15. Procédé selon l'une des revendications 6 à 14, caractérisé en ce que avant la déformation et le durcissement éventuel de la pré-ébauche, au moins un élément de contact électrique et/ou un élément de fixation mécanique est intégré à la pré-ébauche et, lors de la déformation de cette dernière et son éventuel durcissement, cet élément est moulé à l'intérieur du support.
